(19) **Europäisches Patentamt**
**European Patent Office**
**Office européen des brevets**

(11) **EP 4 277 345 A1**

(12) **EUROPEAN PATENT APPLICATION**
published in accordance with Art. 153(4) EPC

(43) Date of publication:
**15.11.2023 Bulletin 2023/46**

(21) Application number: **22745371.9**

(22) Date of filing: **30.01.2022**

(51) International Patent Classification (IPC):
**H04W 28/10** (2009.01)     **H04W 28/24** (2009.01)

(52) Cooperative Patent Classification (CPC):
**H04W 28/10; H04W 28/24**

(86) International application number:
**PCT/CN2022/075254**

(87) International publication number:
**WO 2022/161500 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.02.2021  CN 202110138516**
**30.03.2021  CN 202110342629**

(71) Applicant: **Huawei Cloud Computing
Technologies Co., Ltd.
Guizhou 550025 (CN)**

(72) Inventors:
• **CAO, Jun
Shenzhen, Guangdong 518129 (CN)**
• **ZHANG, Bo
Shenzhen, Guangdong 518129 (CN)**

(74) Representative: **Gill Jennings & Every LLP
The Broadgate Tower
20 Primrose Street
London EC2A 2ES (GB)**

(54) **MULTI-ACCESS EDGE COMPUTING NETWORK, TRAFFIC PROCESSING METHOD, AND RELATED DEVICE**

(57)     This application provides a multi-access edge computing network, including a forwarding device and a plurality of application instances. A target application instance in the plurality of application instances is configured to process a target service whose required latency is lower than a target threshold. The forwarding device is configured to receive a plurality of service requests from a user plane function network element, and preferentially forward a target service request that belongs to the target service to the target application instance. The target application instance is configured to process the received target service request. When the target service is a latency sensitive service (to be specific, it is required that the multi-access edge computing network provides a service with a low latency for the target service, for example, a 5G service), the multi-access edge computing network preferentially forwards the target service, so that the target service may be preferentially served, thereby meeting a latency requirement for processing the latency sensitive service by user equipment. In addition, this application further provides a traffic processing method and apparatus, a computer-readable storage medium, and a computer program product.

FIG. 2

# Description

## TECHNICAL FIELD

This application relates to the field of traffic processing technologies, and in particular, to a multi-access edge computing network, a traffic processing method, and a related device.

## BACKGROUND

A multi-access edge computing (multi-access edge computing, MEC) network provides an IT service environment (including computing resources, storage resources, network resources, and the like) at an edge of a mobile network to reduce a network operation latency and a service delivery latency. Generally, the MEC network includes a plurality of application containers (also referred to as MEC sites) deployed at the edge of the mobile network, and an application program in the application container may provide a corresponding service for user equipment.

However, in many practical application scenarios, the user equipment has a high latency requirement when requesting a service. In this case, a processing capability of the MEC network can hardly meet the latency requirement.

## SUMMARY

This application provides a multi-access edge computing network, to meet a latency requirement of user equipment when the user equipment requests a service. In addition, this application further provides a traffic processing method and apparatus, a computer-readable storage medium, and a computer program product.

According to a first aspect, this application provides a multi-access edge computing network, where the multi-access edge computing network includes a forwarding device and a plurality of application instances. A target application instance in the plurality of application instances is configured to process a target service whose required latency is lower than a target threshold; the forwarding device is configured to receive a plurality of service requests from a user plane function network element, and preferentially forward a target service request that is in the plurality of service requests and that belongs to the target service; and the target application instance is configured to process the received target service request that belongs to the target service.

For the target service whose required latency is lower than a target threshold (or may be referred to as a latency sensitive service), the multi-access edge computing network can preferentially forward the target service, so that the multi-access edge computing network may preferentially provide a service for the target service, thereby meeting a latency requirement of for processing the latency sensitive service by user equipment. In addition, for another service whose required latency is not lower than the target threshold (or may be referred to as a non-latency sensitive service), even if a service with a high latency is provided for the another service by the multi-access edge computing network since the multi-access edge computing network preferentially forwards the target service, the latency may generally fall within a latency range required by the another service. In this way, the multi-access edge computing network can meet latency requirements of the user equipment when the user equipment respectively requests a service for the target service that has a higher latency requirement and the another service that has a lower latency requirement.

In a possible implementation, the target service may be specifically a 5G service. Certainly, in another implementation, the target service may be another type of service that has a high latency requirement.

In a possible implementation, the forwarding device may identify, from the plurality of service requests, the target service request that has an identifier of the 5G service and low latency quality of service. In this way, the forwarding device may preferentially forward, from the plurality of service requests, the service request that has the identifier of the 5G service and the low latency quality of service.

In a possible implementation, the forwarding device may preferentially forward, based on a priority of each service request, the target service request with a highest priority from the plurality of service requests. Specifically, the forwarding device is specifically configured to determine, based on the identifier of the 5G service and the low latency quality of service QoS that are carried in the target service request, that a priority of the target service request is higher than that of another service request in the plurality of requests; determine, based on the identifier of the 5G service carried in the target service request, that a priority of the target service request is higher than that of another service request in the plurality of requests; or determine, based on the low latency quality of service QoS carried in the target service request, that a priority of the target service request is higher than that of another service request in the plurality of requests. Therefore, the forwarding device preferentially forwards the target service request based on the priority.

In a possible implementation, the forwarding device is further configured to obtain a bandwidth for preferentially forwarding the target service request, to forward the target service request through the obtained bandwidth.

In a possible implementation, the bandwidth for forwarding the target service request by the forwarding device is higher than a bandwidth for forwarding another service request. To be specific, for the target service request that has a higher latency requirement, the forwarding device can forward the target service request through a higher bandwidth, so that a transmission latency of the target service request may be further reduced.

In a possible implementation, the forwarding device is further configured to preempt the bandwidth for forwarding the another service request, to forward the target service request. In this way, the transmission latency of the target service request may be further reduced by allocating more bandwidths to the forwarding device.

In a possible implementation, the forwarding device is further configured to: obtain a location of user equipment that sends the service request; and when the location of the user equipment is beyond a service range of the forwarding device, reject to forward the target service request. In this way, an excessively large network transmission latency caused by long-distance network transmission of the target service request that is sent by the user equipment can be prevented from affecting a latency of a service that is provided by the multi-access edge computing network for the target service.

In a possible implementation, the forwarding device may include a gateway and a container network. The gateway may be configured to receive the target service request, and forward the target service request to the container network. The container network may be configured to receive the target service request, and forward the target service request to the target application instance. When the gateway and the container network forward the target service request, only the gateway preferentially forwards the target service request, only the container network preferentially forwards the target service request, or both the gateway and the container network preferentially forward the target service request. In another example, the forwarding device may only include the gateway or the container network, or the forwarding device is specifically another device.

In a possible implementation, the user plane function network element configured to send the target service request to the forwarding device is configured to receive the target service request from a radio access network element. That is, the radio access network element may send the target service request to the forwarding device through the user plane function network element.

In a possible implementation, the user plane function network element is configured to receive the target service request from the user equipment. That is, the user equipment may send the target service request to the multi-access edge computing network through the user plane function network element, so that the multi-access edge computing network can provide a corresponding service for the user equipment based on the target service request.

In a possible implementation, the application instance is specifically an application container.

In a possible implementation, the multi-access edge computing network further includes an information collection network element, where the information collection network element is configured to establish a protocol data unit session for the user equipment, so that the user equipment can send the target service request based on the protocol data unit session, and the forwarding device may receive the target service request based on the protocol data unit session.

According to a second aspect, this application further provides a network, where the network may include the multi-access edge computing network according to the first aspect or any implementation of the first aspect.

In a possible implementation, the network may further include a user plane function network element that is configured to send the target service request to the forwarding device.

In a possible implementation, the network may further include a radio access network element that is configured to send the target service request to the user plane function network element.

In a possible implementation, the network may further include user equipment that is configured to send the target service request to the radio access network element, so that the user plane function network element obtains, through the radio access network element, the target service request sent by the user equipment.

According to a third aspect, this application further provides another multi-access edge computing network, where the multi-access edge computing network includes a forwarding device and a plurality of application instances. A target application instance in the plurality of application instances is configured to process a target service whose latency requirement is lower than a target threshold; the forwarding device is configured to receive a plurality of service requests from a user plane function network element, and forward, through a first channel, a target service request that is in the plurality of service requests and that belongs to the target service, where the first channel is different from a second channel for sending another service request to another application instance; and the target application instance is configured to process the target service request of the target service. In this way, for the target service request of the target service whose latency requirement is lower than the target threshold, the forwarding device may forward the target service request through the independent first channel, so that the target service request may be first forwarded without waiting for the forwarding device to wait for another service request. Therefore, a transmission latency of the target service request can be reduced, and a latency of a service that is provided by the MEC network for the target service can be reduced.

According to a fourth aspect, this application provides a traffic processing method, where the method is applied to a multi-access edge computing network, the multi-access edge computing network includes a forwarding device and a plurality of application instances, a target application instance in the plurality of application instances is configured to process a target service whose latency requirement is lower than a target threshold, and the method includes: The forwarding device receives a plurality of service requests from a user plane function network element; the forwarding device preferentially forwards a target service request that is in the plurality of service requests and that belongs to the target service; and the target application instance processes the target service request of the target service.

In a possible implementation, the target service is a 5th generation mobile communication technology 5G service.

In a possible implementation, the method further includes: The forwarding device identifies, from the plurality of service requests, the target service request that has an identifier of the 5th generation mobile communication technology 5G service and low latency quality of service QoS.

In a possible implementation, that the forwarding device preferentially forwards a target service request that is in the plurality of service requests and that belongs to the target service includes: The forwarding device determines, based on the identifier of the 5G service and the low latency quality of service QoS that are carried in the target service request, that a priority of the target service request is higher than that of another service request in the plurality of requests; determines, based on the identifier of the 5G service carried in the target service request, that a priority of the target service request is higher than that of another service request in the plurality of requests; or determines, based on the low latency quality of service QoS carried in the target service request, that a priority of the target service request is higher than that of another service request in the plurality of requests; and the forwarding device preferentially forwards the target service request based on the priority.

In a possible implementation, the method further includes: The forwarding device obtains a bandwidth for preferentially forwarding the target service request.

In a possible implementation, the bandwidth for forwarding the target service request is higher than a bandwidth for forwarding another service request.

In a possible implementation, the method further includes: The forwarding device preempts the bandwidth for forwarding the another service request, to forward the target service request.

In a possible implementation, the method further includes: rejecting to forward the target service request when a location of user equipment that sends the target service request is beyond a service range of the forwarding device.

In a possible implementation, the forwarding device includes a gateway and a container network, and that the forwarding device preferentially forwards a target service request that is in the plurality of service requests and that belongs to the target service includes: The gateway receives the target service request, and forwards the target service request to the container network; and the container network receives the target service request, and forwards the target service request to the target application instance, where the gateway preferentially forwards the target service request, the container network preferentially forwards the target service request, or both the gateway and the container network preferentially forward the target service request.

In a possible implementation, the application instance is an application container.

In a possible implementation, the multi-access edge computing network further includes an information collection network element, and the method further includes: The information collection network element establishes a protocol data unit session for the user equipment, so that the forwarding device receives the target service request of the user equipment.

According to a fifth aspect, this application provides another traffic processing method, where the traffic processing method is applied to a multi-access edge computing network, the multi-access edge computing network includes a forwarding device and a plurality of application instances, a target application instance in the plurality of application instances is configured to process a target service whose required latency is lower than a target threshold, and the method includes: The forwarding device receives a plurality of service requests from a user plane function network element; the forwarding device forwards, through a first channel, a target service request that is in the plurality of service requests and that belongs to the target service, where the first channel is different from a second channel for sending another service request to another application instance; and the target application instance processes the target service request of the target service.

According to a sixth aspect, this application provides a traffic processing apparatus, where the traffic processing apparatus is used in the foregoing forwarding device, and the traffic processing apparatus includes each module configured to implement the traffic processing method performed by the forwarding device according to the fourth aspect or any possible implementation of the fourth aspect.

According to a seventh aspect, this application provides a traffic processing apparatus, where the traffic processing apparatus is used in the foregoing forwarding device, and the traffic processing apparatus includes each module configured to implement the traffic processing method performed by the forwarding device according to the fifth aspect.

According to an eighth aspect, this application provides a forwarding device, where the forwarding device includes a processor and a memory. The memory is configured to store instructions. When the forwarding device runs, the processor executes the instructions stored in the memory, so that the forwarding device performs the traffic processing method according to the fourth aspect or any implementation of the fourth aspect. It should be noted that the memory may be integrated into the processor, or may be independent of the processor. The forwarding device may further include a bus. The processor is connected to the memory through the bus. The memory may include a readable memory and a random access memory.

According to a ninth aspect, this application provides a forwarding device, where the forwarding device includes a processor and a memory. The memory is configured to store instructions. When the forwarding device runs, the processor executes the instructions stored in the memory, so that the forwarding device performs the traffic processing method according to the fifth aspect. It should be noted that the memory may be integrated into the processor, or may be independent of the processor. The forwarding device may further include a bus. The processor is connected to the memory through the bus. The memory may include a readable memory and a random access memory.

According to a tenth aspect, this application provides a computer-readable storage medium, where the computer-readable storage medium stores instructions, and when the instructions are run on a forwarding device, the forwarding device is enabled to perform the method performed by the forwarding device according to the fourth aspect or any implementation of the fourth aspect.

According to an eleventh aspect, this application provides a computer-readable storage medium, where the computer-readable storage medium stores instructions, and when the instructions are run on a forwarding device, the forwarding device is enabled to perform the method performed by the forwarding device according to the fifth aspect.

According to a twelfth aspect, this application provides a computer program product including instructions. When the computer program product is run on a forwarding device, the forwarding device is enabled to perform the method performed by the forwarding device according to the fourth aspect or any implementation of the fourth aspect.

According to a thirteenth aspect, this application provides a computer program product including instructions. When the computer program product is run on a forwarding device, the forwarding device is enabled to perform the method performed by the forwarding device according to the fifth aspect.

In this application, based on implementations according to the foregoing aspects, more implementations may be provided through further combination.

**BRIEF DESCRIPTION OF DRAWINGS**

To describe the technical solutions in embodiments of this application more clearly, the following briefly describes accompanying drawings for describing embodiments. It is clearly that the accompanying drawings in the following descriptions show merely some embodiments of this application, and a person of ordinary skill in the art may still derive other accompanying drawings from these accompanying drawings.

FIG. 1 is a schematic architectural diagram of an MEC network;
FIG. 2 is a schematic diagram of a network architecture of an MEC network according to an embodiment of this application;
FIG. 3 is a schematic flowchart of a traffic processing method according to an embodiment of this application;
FIG. 4 is a schematic flowchart of creating a session message for user equipment 210 according to an embodiment of this application;
FIG. 5 is a schematic flowchart of another traffic processing method according to an embodiment of this application;
FIG. 6 is a schematic diagram of a network architecture of another MEC network according to an embodiment of this application;
FIG. 7 is a schematic diagram of a structure of a traffic processing apparatus according to an embodiment of this application; and
FIG. 8 is a schematic diagram of a structure of a forwarding device according to an embodiment of this application.

**DESCRIPTION OF EMBODIMENTS**

In the specification, claims, and accompanying drawings of this application, terms "first", "second", and the like are intended to distinguish between similar objects but do not necessarily indicate a specific order or sequence. It should be understood that terms used in such a way are interchangeable in proper circumstances. This is merely a distinguishing manner that is used when objects that have a same attribute are described in embodiments of this application.

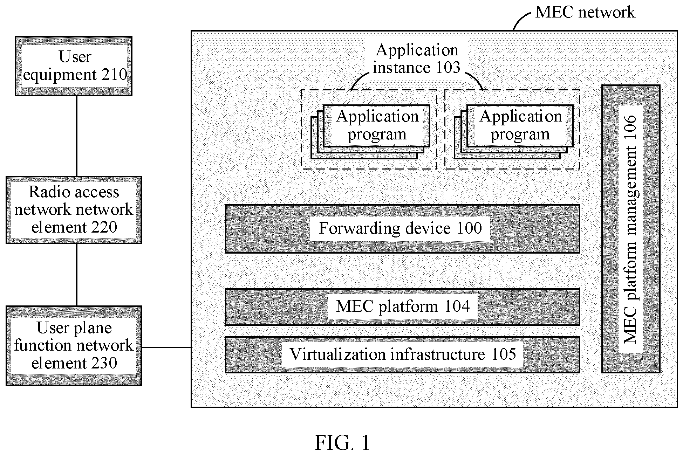

FIG. 1 shows a specific architecture of an MEC network. As shown in FIG. 1, the MEC network may include a forwarding device 100 and a plurality of application instances 103 (FIG. 1 shows an example where two application instances are included for description). The application instance 103 may carry one or more application programs, and the application program on the application instance 103 may provide a corresponding service for user equipment (user equipment, UE) 210 that accesses to the network. For example, in a practical application scenario, the application instance 103 may be specifically an application container (application container).

It should be noted that FIG. 1 mainly shows some network elements or network modules included in the MEC network. In a practical application, the MEC network further includes other network elements or network modules, for example, an MEC platform 104, a virtualization infrastructure 105, and an MEC platform management 106. The MEC platform 104 may be configured to manage a multi-access edge computing device. The virtualization infrastructure 105 may be constructed by using one or more virtualization technologies, including computing virtualization, network virtualization, storage virtualization, and the like. The MEC platform management 106 runs on the virtualization infrastructure 105, and is configured to manage one or more MEC platforms 104. This part of content is not described in detail again in this application.

When executing a service (referred to as a target service in the following), the user equipment 210 may request a corresponding service from the application instance 103 in the MEC network through a radio access network (radio access network, RAN) network element 220 and a user plane function (user plane function, UPF) network element 230. Specifically, the user equipment 210 may send a service request for requesting the application instance 103 to process the target service. The service request may be transmitted to the application instance 103 through the radio access network element 220, the user plane function network element 230, and the forwarding device 100 sequentially. In this way, the application program on the application instance 103 may provide a corresponding service for the target service.

When a plurality of user equipment 210 requests a service from the MEC network simultaneously, the forwarding device 100 in the MEC network generally forwards each request to the corresponding application instance 103 based on a receiving sequence of the service request. However, in a practical application, different services executed by different user equipment 210 may have different requirements on a latency of a service provided by the MEC network. For example, when the target service executed by the user equipment 210 is a service (referred to as a latency sensitive service for short in the following) that has a high latency requirement, for example, a 5th generation mobile communication technology (5th generation mobile network, 5G) service, the latency of the service provided by the MEC network is generally required to be low, for example, the latency is required to be lower than 20 ms (millisecond). However, for a service that is executed by another user equipment 210 and that has a low latency requirement, even if the latency of the service provided by the MEC network is one second or higher, the requirement of the service can still be met. In this case, if the forwarding device 100 in the MEC network receives a service request A sent by the user equipment 210 for the latency sensitive service, and this request is later than a service request B that is received by the MEC network 100 and that is sent by another user equipment 210 for a non-latency sensitive service, the service request A may need to wait for the forwarding device 100 to first complete transmission of the service request B. In this way, a latency from a point at which the user equipment 210 sends a service request for the latency sensitive service to a point at which the MEC network provides a service based on the application instance 103 for the latency sensitive service may exceed a latency requirement of the latency sensitive service because the service request waits for the forwarding device 100 to first forward another service request during a transmission process.

In addition, when a large quantity of user equipment 210 simultaneously requests a service from the MEC network, due to a limited processing capability of the forwarding device 100 in the MEC network, service request blocking and queuing may occur when a plurality of service requests are forwarded. This is more likely to cause a problem that the latency of the service provided by the MEC network for the latency sensitive service does not meet the latency requirement of the latency sensitive service.

Based on this, in embodiments of this application, in a process that the MEC network provides a service based on each service request, after receiving the plurality of service requests from the user plane network element 230, the forwarding device 100 may preferentially forward, to a target application instance, for example, an application instance on a left side in FIG. 1 (or an application instance on a right side in FIG. 1) in the plurality of application instances 103, a target service request that is in the plurality of service requests and that belongs to the target service, where the target service is a processed service whose latency requirement is lower than a target threshold. In this way, for the target service request of the target service, because the forwarding device 100 can preferentially forward the target service request, the MEC network can preferentially provide a service for the target service (the target service may be a latency sensitive service), to meet a latency requirement of the user equipment 210 processing the target service. In addition, for a non-latency sensitive service, even if the latency of the service provided by the MEC network is high, the latency generally still falls within a latency range required by the non-latency sensitive service. In this way, the MEC network can meet a latency requirement of the user equipment 210 when the user equipment 210 requests a service.

In addition, even if a large quantity of user equipment 210 simultaneously requests a service from the MEC network, the MEC network can preferentially provide a service for a latency sensitive service, so that stability of the MEC network serving the latency sensitive service can be ensured as much as possible.

For ease of understanding, the following describes embodiments of this application with reference to the accompanying drawings.

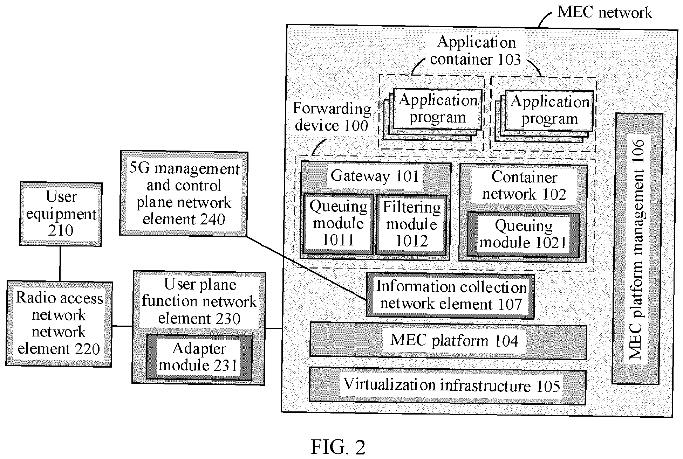

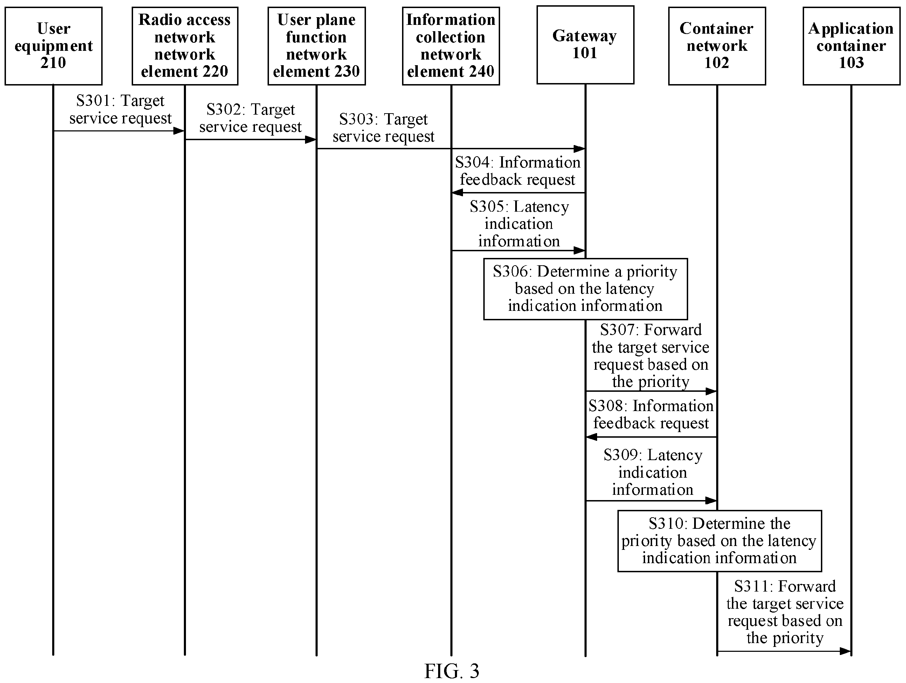

Refer to FIG. 2 and FIG. 3. FIG. 2 is an example of a schematic architectural diagram of an MEC network according to an embodiment of this application. FIG. 3 is a schematic flowchart of a traffic processing method according to an embodiment of this application. The MEC network shown in FIG. 2 is applicable to an edge network based on a 5th generation mobile communication technology (5th generation mobile network, 5G). Correspondingly, a service processed by the MEC network may include a 5G service that has a high latency requirement. In addition, based on the MEC network shown in FIG. 1, an information collection network element 107 is newly added to the MEC network shown in FIG. 2. Besides, the forwarding device 100 in FIG. 1 may specifically include a gateway (gateway) 101 and a container network (container network) 102 in the MEC network shown in FIG. 2, where a queuing module 1011 and a filtering module 1012 are newly added to the gateway 101, and a queuing module 1021 is newly added to the container network 102. In a practical application, the information collection network element 107 may be integrated with an existing network element into one network element, for example, integrated with the gateway 101 or the container network 102 for deployment, or may be independently deployed. For ease of description, in this embodiment, an example in which the information collection network element 107 is independently deployed in the MEC network is used for description.

In practical deployment, the information collection network element 107, the queuing module 1011, and the queuing module 1021 that are newly added may be implemented by software, for example, may be a computer program running on a network element; or may be implemented by hardware, for example, implemented by an application-specific integrated circuit (application-specific integrated circuit, ASIC) or a programmable logic device (programmable logic device, PLD). The PLD may be a complex programmable logic device (complex programmable logic device, CPLD), a field programmable gate array (field programmable gate array, FPGA), or a generic array logic (generic array logic, GAL), or any combination thereof to implement functions of the foregoing network element or module.

Based on the MEC network shown in FIG. 2, the traffic processing method shown in FIG. 3 may specifically include the following steps.

S301: When user equipment 210 executes a target service, the user equipment 210 sends a target service request for the target service to a radio access network element 220, where the target service request is for requesting an application instance 103 in the MEC network to provide, through an application program running on the application instance, a service for the target service for the user equipment 210.

For example, in an artificial intelligence (artificial intelligence, AI) scenario with reference to edge computing, the user equipment 210 may execute an identity authentication service. In this case, the user equipment 210 may send an identity authentication request (that is, the foregoing target service request) to the radio access network element 220. The identity authentication request may include to-be-authenticated information (for example, user fingerprint information and a face image) indicating a user identity, so that after the identity authentication request is transmitted to the MEC network, the application instance 103 in the MEC network can complete authentication on the user identity based on the identity authentication request, and feed back an identity authentication result to the user equipment 210. It should be understood that the foregoing scenario is merely an example for description. This embodiment of this application is further applicable to another applicable scenario, for example, any scenario such as a live streaming scenario with reference to edge computing, augmented reality (augmented reality, AR), virtual reality (virtual reality, VR), or a cloud game. This is not limited in this embodiment.

Generally, the target service request may include related information of the user equipment 210, for example, include an identifier of the user equipment 210, and an identifier (for example, a service name) of the target service executed by the user equipment 210. For example, the identifier of the user equipment 210 may be, for example, any one or more of information such as a name, an Internet protocol (Internet protocol, IP) address, and a media access control address (media access control address, MAC address) of the user equipment 210. In a practical application, the target service request may further include more other content, for example, a service type and a requested service name. This is not limited in this embodiment.

S302: The radio access network element 220 forwards the target service request to a user plane function network element 230.

S303: The user plane function network element 230 forwards the target service request to the gateway 101 in the MEC network.

Generally, after receiving the target service request, the gateway 101 forwards the target service request to the container network 102 in the MEC network, so that the container network 102 arranges a corresponding application instance 103 to provide a corresponding service based on the target service request. However, in a practical application, the gateway 101 generally receives a plurality of service requests from a plurality of user equipment, and forwards the service requests to the container network 102 one by one. It should be understood that, because latencies required by services corresponding to different service requests are generally different, if the gateway 101 forwards the plurality of service requests one by one in a sequence of receiving the service requests, for some service requests (for example, the target service request) corresponding to latency sensitive services, a process of waiting for another service request to be forwarded may increase a latency of a service provided by the MEC network for the latency sensitive service. Consequently, the latency does not meet a requirement of the latency sensitive service.

Therefore, in this embodiment, when receiving the plurality of service requests, the gateway 101 may identify a target service request that is in the plurality of service requests and that belongs to the target service, where the target service is a service that requires a processed latency to be lower than a preset threshold, so that the gateway 101 may preferentially forward the target service request. In a practical application scenario, most 5G services have a high requirement on a processed latency, for example, require a processed latency of the 5G services not to exceed 28 ms. Based on this, in some examples, the gateway 101 may determine whether there is a target service request that has an identifier of the 5G service in the plurality of received service requests. If there is a target service request that has the identifier of the 5G service, it indicates that the target service request is a service request that belongs to the 5G service, and the gateway 101 may preferentially forward the target service request. If there is no target service request that has the identifier of the 5G service, the gateway 101 may sequentially forward the service requests in a sequence of receiving the service requests. Further, the gateway 101 may identify, from the plurality of service requests, a target service request that has an identifier of the 5G service and low latency quality of service (quality of service, QoS), and preferentially forward the target service request.

In another example, the gateway 101 may alternatively determine, based on a priority of each service request, a sequence of forwarding each service request. In this case, a priority of the target service request is the highest in priorities of the plurality of service requests.

For ease of understanding, an example in which the gateway 101 determines a forwarding sequence based on the priority of each service request is used in the following for description. After receiving the plurality of service processing requests, the gateway 101 may specifically continue to perform the following step S304, to determine a forwarding sequence of the plurality of service requests.

S304: The gateway 101 sends an information feedback request to the information collection network element 107 in the MEC network, where the information feedback request is for requesting the information collection network element 107 to feed back latency indication information corresponding to processing of the target service, where the latency indication information indicates a processed latency of the target service on the user equipment 210.

In this embodiment, the gateway 101 may determine, based on the latency indication information corresponding to the target service, a priority of forwarding the target service request, where the latency indication information indicates the processed latency of the target service. In a practical application, the gateway 101 may obtain, through the information collection network element 107, the latency indication information corresponding to each service request, to determine the forwarding sequence of the plurality of service requests based on the latency indication information corresponding to each service request. A manner of obtaining latency indication information corresponding to another service request other than the target service request is similar to a specific implementation that the gateway 101 obtains the latency indication information corresponding to the target service request, and details are not described in this embodiment again.

S305: The information collection network element 107 feeds back the latency indication information to the gateway 101.

In an implementation, the information feedback request sent by the network element 101 to the information collection network element 107 may carry the identifier of the user equipment and the identifier of the target service, so that the information collection network element 107 may determine, based on the identifier of the user equipment and the identifier of the target service that are carried in the information feedback request, the latency indication information corresponding to the target service executed by the user equipment 210. The information collection network element 107 may collect, in a process that the user equipment 210 establishes a session, latency indication information corresponding to each service executed by the user equipment 210. For a specific process of establishing a session, refer to the following detailed descriptions, and details are not described herein.

S306: The gateway 101 determines a priority of the target service request based on the received latency indication information.

S307: The gateway 101 preferentially forwards the target service request in a plurality of service requests to the container network 102 based on the priority of the target service request.

In a possible implementation, the latency indication information received by the gateway 101 may be, for example, a network slice used when the user equipment 210 executes the target service and quality of service of the user equipment 210. Different types of network slices may indicate latencies in different sizes. For example, when the user equipment 210 sends a service request through a 5G slice, a type of the 5G slice may include, for example, a default slice, a common slice, and another slice. When the type of the 5G slice used for sending the service request is specifically the default slice or the common slice, a latency (latency) corresponding to the 5G slice may be 1000 ms (millisecond). When the type of the 5G slice is specifically the another slice, a latency corresponding to the 5G slice may be any value less than 1000 ms, for example, 200 ms. For the quality of service, a priority of the quality of service may be described by using a SQI (5G QoS Indicator), and the SQI is a scalar.

For example, the queuing module 1011 in the gateway 101 may calculate the priority (priority) of the service request based on the latency corresponding to the network slice and the SQI corresponding to the quality of service by using the following formula (1):

$$priority = latency * 5QI \ (1)$$

A smaller value of priority indicates a higher priority corresponding to the service request, and a lower latency corresponding to the service request.

For each received service request, the queuing module 1011 in the gateway 101 may calculate, through the foregoing process, a priority value corresponding to the service request, sort priority values corresponding to a plurality of service requests in ascending order, and use the sequence as a sequence of forwarding the service requests by the gateway 101 (a service request with a smallest priority value is first forwarded). In this way, for the target service request corresponding to the latency sensitive service (that is, the target service), a corresponding priority value is relatively small. Correspondingly, the gateway 101 may preferentially send the service request corresponding to the latency sensitive service, so that the latency of the service provided by the MEC network for the latency sensitive service may be reduced because the gateway 101 preferentially sends the service request corresponding to the service.

After receiving the plurality of service requests, the gateway 101 may temporarily determine a sequence of receiving the plurality of service requests by the gateway 101 as a forwarding sequence of the service requests, and then the gateway 101 may determine the priority of each service request based on the latency indication information of the service request, and re-queue the plurality of service requests based on the priority. A re-queued sequence is the forwarding sequence of the plurality of service requests. Certainly, in another example, after receiving the plurality of service requests, the gateway 101 directly determines, based on the priority of each service request, a sequence of forwarding the plurality of service requests. This is not limited in this embodiment.

Certainly, the foregoing process is merely used as an example for description. In another possible implementation, the latency indication information obtained by the gateway 101 may alternatively be a service type, and different service types correspond to different latency requirements. For example, a latency of a game service may be lower than a latency of a video play service, so that the gateway 101 may preferentially forward a service request that has a high latency requirement based on the service type corresponding to each service request. A correspondence between the service type and the latency may be preset. In this embodiment, a specific implementation of how the gateway 101 determines the forwarding sequence of each service request based on the latency indication information is not limited.

In a further possible implementation, when forwarding the service request, the gateway 101 may further determine, with reference to a location of the user equipment 210, whether to forward the service request sent by the user equipment 210. In a specific implementation, while requesting the latency indication information from the information collection network element 107, the gateway 101 may further request the location of the user equipment 210 from the information collection network element 107, so that the filtering module 1012 in the gateway 101 may further determine whether the location of the user equipment 210 is within a preset location range, where the preset location range may be, for example, a location range served by the gateway 101. When the location of the user equipment 210 is within the preset location range, the gateway 101 may forward the service request based on the priority; and when the location of the user equipment 210 is not within the preset location range, the filtering module 1012 may filter the service request, so that the gateway 101 may reject to forward the service request. Correspondingly, the user equipment 210 may change a request target and resend the service request. In this way, it can be avoided as much as possible that the latency of the service provided by the MEC network is excessively high because the service request sent by the user equipment 210 undergoes a long-time network transmission process.

In some examples, the location of the user equipment 210 may be at least one of the following examples: network location information such as a cell, a cell list (cell list), a tracking area (tracking area, TA), a tracking area list (TA list), measurement report (measurement report, MR) location information, or location services (location services, LCS) location information; geographical location information represented in another manner such as a latitude and a longitude, an administrative region, or the like; or identification information of a base station accessed by the user equipment 210. In a practical application, because a location of the base station is relatively fixed, when the user equipment 210 accesses the base station, the location corresponding to the base station (or an identifier of the base station) may be used as the location (a geographical location or a network location) of the user equipment 210.

In a practical application, when forwarding the service request (including the target service request), the gateway 101 may further allocate a bandwidth to the service request. That the target service request is forwarded is used as an example. The gateway 101 may obtain the type of the network slice used by the user equipment 210 when the user equipment 210 executes the target service, and determine, based on the type of the network slice, a bandwidth for forwarding the target service request. For example, when executing the target service, the user equipment 210 transmits the target service request through a 5G network slice, if the type of the 5G network slice is the default slice or the common slice, the gateway 101 may allocate, by default, 10% of a total bandwidth to the target service request; and if the type of the 5G network slice is the another slice, the gateway 101 may allocate the bandwidth to the target service request based on a preset bandwidth allocation policy. Optionally, when the total bandwidth of the gateway 101 is not completely allocated, different service requests may preempt the remaining bandwidth. That is, the gateway 101 may continue to allocate the bandwidth from the remaining bandwidth to different service requests, thereby increasing the bandwidth allocated by the gateway 101 to one or more service requests. Alternatively, the gateway 101 may preempt a bandwidth for forwarding another service request, and forward the target service request by using the preempted bandwidth; or the gateway 101 may increase, by preempting a bandwidth for forwarding another service, a bandwidth for forwarding the target service request; or when allocating the bandwidth, the gateway 101 allocates a larger bandwidth to the target service request than a bandwidth allocated to any other service request. In this way, the gateway 101 may reduce a transmission latency of the target service request based on a large bandwidth.

S308: The container network 102 sends an information feedback request to the information collection network element 107, where the information feedback request is for requesting the information collection network element 107 to feed back the latency indication information corresponding to the target service processed by the user equipment 210.

S309: The information collection network element 107 feeds back the latency indication information to the container network 102.

S310: The container network 102 determines, through calculation, the priority of the target service request based on the received latency indication information.

S311: The container network 102 preferentially forwards the target service request in the plurality of received service requests to the application instance 103 based on the priority of the target service request.

In a practical application, the container network 102 may receive the service requests forwarded by one or more gateways. Therefore, in this embodiment, after receiving the plurality of service requests, the container network 102 may also sort the plurality of received service requests, and sequentially forward the service requests to corresponding application instances 103 based on the sequence.

Similar to the gateway 101, the container network 102 may determine the forwarding sequence of the service requests through the queuing module 1021, so that the container network 102 sequentially forwards the service requests to corresponding application instances 103 based on the forwarding sequence. For a specific implementation process where the container network 102 determines the forwarding sequence of the service requests, refer to related descriptions that the gateway 101 determines the forwarding sequence of the service requests, and details are not described herein again.

It should be noted that, in this embodiment, an example in which both the gateway 101 and the container network 102 preferentially forward the target service request based on the priority of the target service request is used for description. In another possible embodiment, only the gateway 101 may forward the service request based on the priority of the service request. In this case, the container network 102 may sequentially forward the service requests based on a receiving sequence of the service requests (or in another manner). Alternatively, only the container network 102 may forward, based on the priority of each service request, each service request received by the container network 102. In this case, when forwarding service processing to the container network 102, the gateway 101 may sequentially forward, based on a sequence of receiving each service request (or in another manner), each service request received by the gateway 101. Alternatively, when both the gateway 101 and the container network 102 forward the service request based on the priority of the service request, while forwarding the service request to the container network 102, the gateway 101 may further provide priority information corresponding to the service request to the container network 102. For example, the priority information (priority value) may be carried in a specific field of the service request. In this way, the container network 102 may no longer need to obtain the latency indication information from the information collection network element and determine the latency of the service request.

It should be noted that, in the MEC network shown in FIG. 2, an example in which the forwarding device 100 includes the gateway 101 and the container network 102 is used for description. In another possible embodiment, the forwarding device 100 may include only the gateway 101, the forwarding device 100 includes only the container network 102, or the forwarding device 100 is specifically another possible device. A specific implementation of the forwarding device 100 is not limited in this embodiment. Correspondingly, for a specific process where the forwarding device 100 in another implementation forwards the target service request, refer to the foregoing process descriptions. Details are not described in this embodiment again.

In addition, that the gateway 101 and the container network 102 shown in FIG. 3 obtain the latency indication information (and the location information of the user equipment 210) from the information collection network element 107 is merely used as an example of an implementation. For example, in another possible embodiment, the user plane function network element 230 may provide the latency indication information for the gateway 101 and/or the container network 102. In this embodiment, in a practical application, a specific implementation of a specific network element from which the gateway 101 and the container network 102 obtain the latency indication information is not limited.

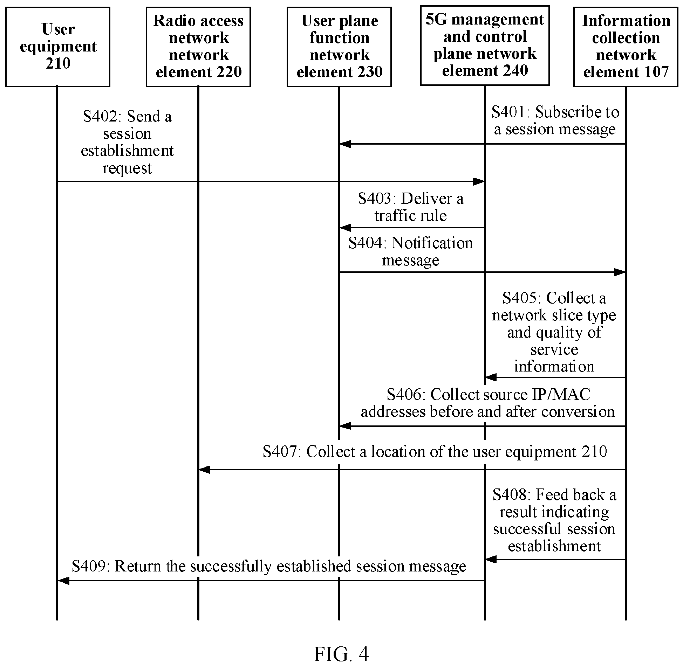

The method embodiment shown in FIG. 3 is mainly used for describing a specific implementation process where the MEC network meets a latency requirement of the user equipment 210 when the user equipment 210 requests a service. In a practical application, before requesting a service from the MEC network, a session further needs to be established for the user equipment 210 in advance, so that the user equipment 210 may send a service request to the MEC network based on the session. With reference to FIG. 4, the following describes in detail a specific implementation process of establishing a session for the user equipment 210. As shown in FIG. 4, the specific process of establishing a session is applicable to the network architecture shown in FIG. 2. The process may specifically include:

S401: The information collection network element 107 subscribes to a session message from the user plane function network element 230.

An adapter (adapter) module 231 may be configured in the user plane function network element 230. As shown in FIG. 2, the user plane function network element 230 may implement communication and interaction with the information collection network element 107 through the adapter module 231. In addition, the user equipment 210 and the application instance 103 may be located in different network spaces. Therefore, when the user equipment 210 subsequently requests a service from the application instance 103, the adapter module 231 may further convert a source IP/MAC address of the service request, for example, convert the source IP/MAC address of the user equipment 210 included in the service request into a source IP/MAC address applicable to a network space where the application instance 103 is located.

For example, in this embodiment, a session established for the user plane function network element 230 may be, for example, a protocol data unit (protocol data unit, PDU) session or another applicable session.

S402: The user equipment 210 sends a session establishment request to a 5G management and control plane network element 240 through the radio access network element 220, where the session establishment request is for requesting the 5G management and control plane network element 240 to establish a session for the user equipment 210.

In a practical application, the user equipment 210 may first complete state activation, for example, activating a state from a sleep state to an active state, and then apply to the 5G management and control plane network element 240 for a session after completing the state activation.

In some implementations, the session establishment request sent by the user equipment 210 to the 5G management and control plane network element 240 may carry an identifier of the user equipment 210, to notify the 5G management and control plane network element 240 of an object of a to-be-established session. In addition, the session establishment request may further include a network slice type and quality of service (for example, a quality of service rule and a packet filtering list) information used when the user equipment 210 executes one or more services. Further, the session establishment request may further include network slice rule information, for example, a user equipment route selection policy (LTE route selection policy, URSP). Correspondingly, the 5G management and control plane network element 240 may store one or more types of information carried in the session establishment request.

S403: The 5G management and control plane network element 240 delivers a traffic rule to the user plane function network element 230.

In some examples, the traffic rule delivered by the 5G management and control plane network element 240 may be, for example, a traffic distribution rule, used for determining traffic (for example, the service request) forwarded to the MEC network and traffic forwarded to a data center. Certainly, in a practical application, the traffic rule delivered by the 5G management and control plane network element 240 may alternatively be another rule or the like. This is not limited in this embodiment.

S404: The user plane function network element 230 sends a notification message to the information collection network element 107 based on the session message subscribed to by the information collection network element 107 in advance, to notify the information collection network element 107 that the session has been successfully established for the user equipment 210.

For example, the session message may include the identifier of the user equipment 210.

S405: The information collection network element 107 collects, from the 5G management and control plane network element 240, the network slice type and quality of service information that are used when the user equipment 210 executes one or more services, to subsequently provide the information for the gateway 101 and/or the container network 102.

For example, the information collection network element 107 may send an information obtaining request for the user equipment 210 to the 5G management and control plane network element 240, so that the 5G management and control plane network element 240 feeds back the network slice type and quality of service information of the user equipment 210 to the information collection network element 107 based on the information obtaining request.

Further, because the user equipment 210 and the application instance 103 may be located in different network spaces, the information collection network element 107 may further obtain the source IP/MAC address of the user equipment 210 and the source IP/MAC address converted by the user plane function network element 230. Based on this, this embodiment may further include the following step S406.

S406: The information collection network element 107 obtains, from the user plane function network element 230, the source IP/MAC address of the user equipment 210 and the source IP/MAC address converted for the user equipment 210.

The user plane function network element 230 may specifically convert the source IP/MAC address through the pre-configured adapter module 231.

S407: The information collection network element 107 obtains a location of the user equipment 210 from the radio access network element 220.

In this way, when the user equipment 210 requests a service from the MEC network, the information collection network element 107 may provide location information of the user equipment 210 for the gateway 101 in the MEC network, so that the gateway 101 may determine, based on the location information, whether to filter the service request from the user equipment 210. For example, when the location of the user equipment 210 is beyond a service range for which the gateway 101 is responsible, the gateway 101 may reject to forward the service request to the container network 102.

S408: The information collection network element 107 feeds back, to the 5G management and control plane network element 240, a result indicating successful session establishment.

S409: The 5G management and control plane network element 240 returns the session message that is successfully established to the user equipment 210.

In this way, the user equipment 210 can successfully establish a session, so that in a subsequent process of executing a target service, the user equipment 210 may send a corresponding service request to the MEC network based on the session.

It should be noted that the foregoing process of establishing a session for the user equipment 210 is merely an example for description. In a practical application, some steps may be adaptively added/deleted, or a performing sequence of the steps may be adjusted. For example, in another possible session establishing process, only step S401 to step S404 and step S408 to step S409 may be performed; or when all the foregoing step S401 to step S409 are performed, a performing sequence of step S405 to step S407 may be adjusted.

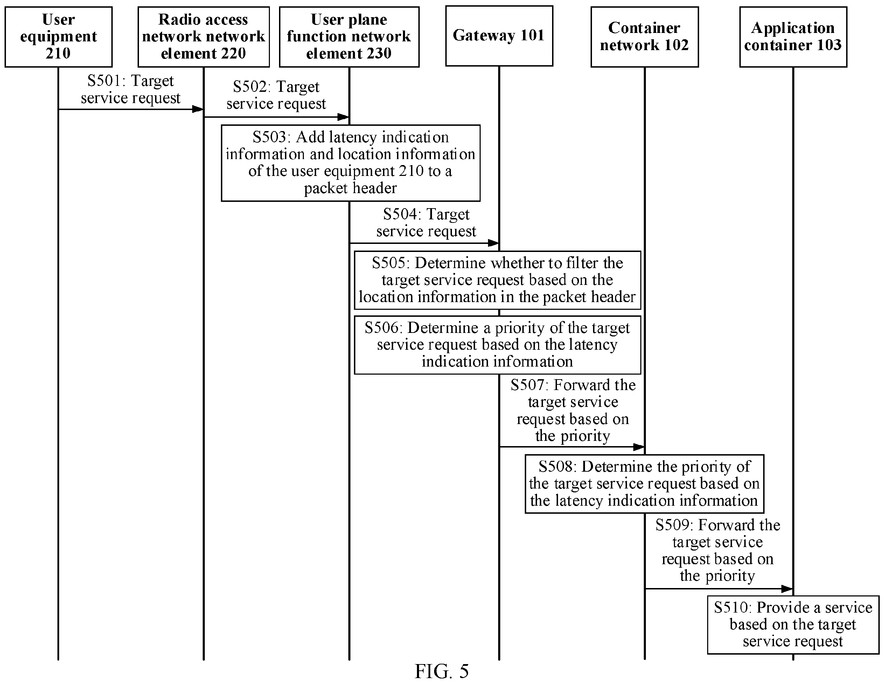

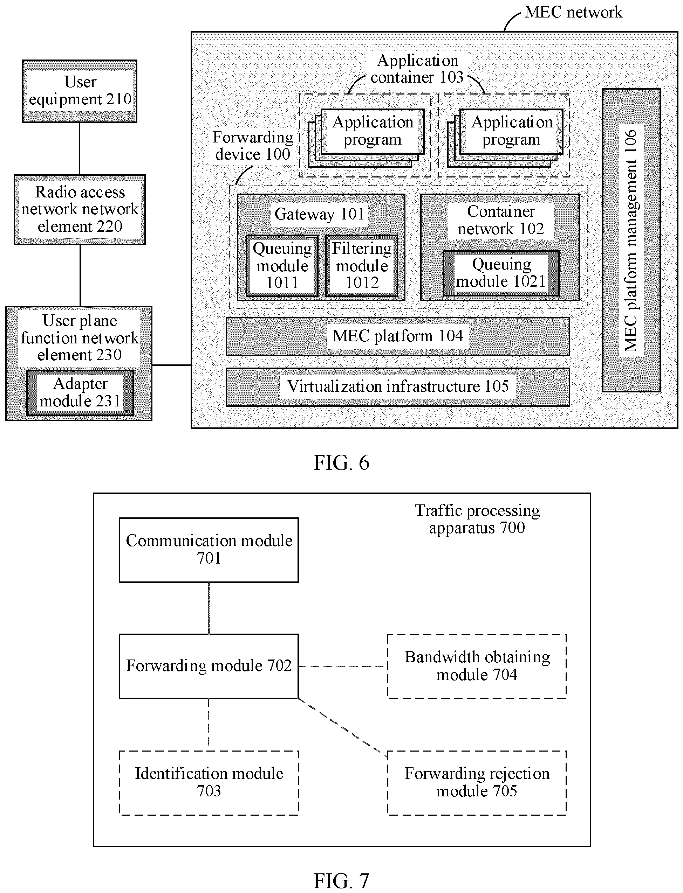

In the method embodiment shown in FIG. 3, the gateway 101 and/or the container network 102 obtain/obtains the latency indication information from the information collection network element 107 to determine the priority of forwarding each service request. In another possible embodiment, the gateway 101 and/or the container network 102 may alternatively directly obtain the latency indication information from the service request. FIG. 5 is a schematic flowchart of another traffic processing method. The traffic processing method shown in FIG. 5 is applicable to a network architecture shown in FIG. 6, and an MEC network in FIG. 6 includes a gateway 101, a container network 102, an application instance 103 (an MEC platform 104, a virtualization infrastructure 105, and an MEC platform management 106), and the like. Both the gateway 101 and the container network 102 forward a service request based on a priority of the service request. The traffic processing method shown in FIG. 5 may specifically include the following steps:

S501: When user equipment 210 executes a target service, the user equipment 210 sends a target service request for the target service to a radio access network element 220, where the target service request is for requesting the application instance 103 in the MEC network to provide, through an application program running on the application instance 103, a service for the target service for the user equipment 210.

S502: The radio access network element 220 forwards the target service request to a user plane function network element 230.

S503: The user plane function network element 230 modifies a packet header of the target service request, and adds parameters such as latency indication information and location information of the user equipment 210 to the packet header.

For example, the latency indication information may be, for example, a network slice (for example, a 5G slice) and quality of service information. In another possible implementation, the latency indication information may be, for example, a service type, and different service types may indicate latencies in different sizes.

S504: The user plane function network element 230 forwards the modified target service request to the gateway 101 in the MEC network.

S505: The gateway 101 parses out, from the packet header of the received target service request, a location of the user equipment 210, and determines whether to filter the target service request from the user equipment 210.

In this embodiment, when the gateway 101 determines that the location of the user equipment 210 is not within a service range of the gateway 101, the gateway 101 may determine to filter the target service request of the user equipment 210; or when the gateway 101 determines that the location of the user equipment 210 is within a service range of the gateway 101, the gateway 101 may determine to skip filtering the target service request, and complete a subsequent forwarding process.

S506: When determining to skip filtering the target service request of the user equipment 210, the gateway 101 parses out, from the packet header of the target service request, the latency indication information corresponding to the target service that is executed by the user equipment 210, and determines a priority of the target service request based on the latency indication information.

S507: The gateway 101 forwards the target service request in a plurality of service requests received by the gateway 101 to the container network 102 based on priorities of the service requests.

In this embodiment, for each received service request, the gateway 101 may calculate a priority corresponding to each service request, to determine a forwarding sequence of each service request based on the priority of each service request, and forward the service request based on the sequence. When the priority corresponding to the target service request is the highest in the priorities corresponding to the plurality of service requests, the gateway 101 preferentially forwards the target service request to the container network 102.

S508: The container network 102 parses out, from the packet header of the target service request, the latency indication information corresponding to the target service, and determines the priority of the target service request based on the latency indication information.

S509: The container network 102 forwards, based on the priority of the target service request, the target service request in the plurality of service requests received by the container network 102 to the corresponding application instance 103.

Similar to the gateway 101, the container network 102 may also calculate, based on the latency indication information carried in a packet header of each service request, the priority corresponding to each service request, to determine the forwarding sequence of each service request based on the priority of each service request, and forward each service request to a corresponding application instance 103 based on the sequence. When the priority corresponding to the target service request is the highest in the priorities corresponding to the plurality of service requests, the container network 102 preferentially forwards the target service request to the application instance 103.

S510: The application instance 103 provides, based on the target service request, a corresponding service through the application program carried on the application instance 103.

Before sending the target service request, a session may be established for the user equipment 210. For a specific implementation, refer to related descriptions in the embodiment shown in FIG. 4, or a session is established for the user equipment 210 by using an existing implementation of establishing a session, and details are not described again in this embodiment.

It should be noted that, in embodiments shown in FIG. 3 and FIG. 5, when forwarding the plurality of service requests (including the target service request), the forwarding device 100 (including the gateway 101 and the container network 102) may sequentially forward each service request through a same channel (to be specific, a path between the forwarding device 100 and an application container 103). However, in another possible embodiment, there may be a plurality of channels between the forwarding device 100 and the application container 103, for example, including a first channel and a second channel. In this way, in a process where the forwarding device 100 forwards the plurality of service requests, if the forwarding device 100 determines that the target service request in the plurality of service requests meets a target service condition, for example, the target service request has a highest priority, the forwarding device 100 is applicable to the first channel that matches the target service condition to send the target service request to the application instance 103, and the forwarding device 103 may forward another service request in the plurality of service requests through the second channel. In this way, the forwarding device 100 may forward different service requests through different channels, so that a transmission latency of each service request may be reduced, and a latency of a service provided by the MEC network for a service corresponding to each service request can be reduced.

The MEC network and the traffic processing method provided in embodiments of this application are described in detail above with reference to FIG. 1 to FIG. 6. The following describes, with reference to the accompanying drawings, a traffic processing apparatus provided in an embodiment of this application from a perspective of a functional unit.

FIG. 7 shows a schematic diagram of a structure of a traffic processing apparatus, where the traffic processing apparatus 700 may be used in the forwarding device 100 in the MEC network shown in FIG. 2 or FIG. 6. The traffic processing apparatus 700 includes:

a communication module 701, configured to receive a plurality of service requests from a user plane function network element; and
a forwarding module 702, configured to preferentially forward a target service request that is in the plurality of service requests and that belongs to a target service, so that a target application instance processes the target service request of the target service, where the target service requires a processed latency to be lower than a target threshold.

In a possible implementation, the target service is a 5th generation mobile communication technology 5G service.

In a possible implementation, the traffic processing apparatus 700 further includes:
an identification module 703, configured to identify, for the forwarding device from the plurality of service requests, the target service request that has an identifier of the 5th generation mobile communication technology 5G service and low latency quality of service QoS.

In a possible implementation, the forwarding module 702 is specifically configured to: determine, based on the identifier of the 5G service and the low latency quality of service QoS that are carried in the target service request, that a priority of the target service request is higher than that of another service request in the plurality of requests; determine, based on the identifier of the 5G service carried in the target service request, that a priority of the target service request is higher than that of another service request in the plurality of requests; or determine, based on the low latency quality of service QoS carried in the target service request, that a priority of the target service request is higher than that of another service request in the plurality of requests; and preferentially forward the target service request based on the priority.

In a possible implementation, the traffic processing apparatus 700 further includes:
a bandwidth obtaining module 704, configured to obtain a bandwidth for preferentially forwarding the target service request.

In a possible implementation, the bandwidth for forwarding the target service request is higher than a bandwidth for forwarding another service request.

In a possible implementation, the traffic processing apparatus 700 further includes:
the bandwidth obtaining module 704, configured to preempt the bandwidth for forwarding the another service request, to forward the target service request.

In a possible implementation, the traffic processing apparatus 700 further includes:

a forwarding rejection module 705, configured to reject to forward the target service request when a location of user equipment that sends the target service request is beyond a service range of the forwarding device.

In a possible implementation, the application instance is an application container.

The traffic processing apparatus 700 according to this embodiment of this application may correspondingly perform the method described in embodiments of this application. In addition, the foregoing and other operations and/or functions of the modules of the traffic processing apparatus 700 are respectively for implementing corresponding procedures of the methods performed by the forwarding device in FIG. 3 and FIG. 5. For brevity, details are not described herein again.

In the foregoing embodiments, the forwarding device 100 (including the gateway 101 and/or the container network 102) involved in a traffic processing process may be implemented by an independent hardware device. In another possible implementation, the forwarding device may alternatively be software configured on a forwarding device. In addition, the forwarding device may implement functions of the forwarding device 100 by running the software on the forwarding device. The following describes in detail the forwarding device 100 involved in the traffic processing process.

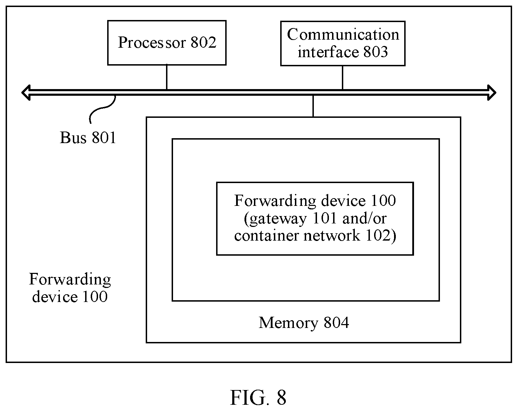

FIG. 8 is a schematic diagram of a structure of a forwarding device. The forwarding device 100 shown in FIG. 8 may be specifically configured to implement functions of the forwarding device 100 in embodiments shown in FIG. 2 to FIG. 6.

The forwarding device 100 includes a bus 801, a processor 802, a communication interface 803, and a memory 804. The processor 802, the memory 804, and the communication interface 803 communicate with each other through the bus 801. The bus 801 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one bold line is used to represent the bus in FIG. 8, but this does not mean that there is only one bus or only one type of bus. The communication interface 803 is configured to communicate with the outside, for example, receive a target service request sent by a user plane function network element.

The processor 802 may be a central processing unit (central processing unit, CPU). The memory 804 may include a volatile memory (volatile memory), for example, a random access memory (random access memory, RAM). The memory 804 may further include a non-volatile memory (non-volatile memory), for example, a read-only memory (read-only memory, ROM), a flash memory, an HDD, or an SSD.

The memory 804 stores executable code, and the processor 802 executes the executable code to perform the method performed by the forwarding device 100.

Specifically, when embodiments shown in FIG. 2 to FIG. 6 are implemented and the forwarding device 100 described in embodiments shown in FIG. 2 to FIG. 6 is implemented by software, software or program code required for performing functions of the forwarding device 100 in FIG. 2 to FIG. 6 is stored in the memory 804. Interaction between the forwarding device 100 and another device is implemented through the communication interface 803. For example, the forwarding device 100 receives, through the communication interface 803, a target service request sent by the user plane function network element 230. The processor is configured to execute instructions in the memory 804, to implement the method performed by the forwarding device 100.

In addition, an embodiment of this application further provides a computer-readable storage medium, where the computer-readable storage medium stores instructions, and when the instructions are run on a forwarding device, the forwarding device is enabled to perform the method in the foregoing embodiments.

An embodiment of this application further provides a computer program product. When the computer program product is executed by a plurality of computers, the plurality of computers perform any one of the foregoing data providing methods. The computer program product may be a software installation package. When any method of the foregoing data providing methods needs to be used, the computer program product may be downloaded and executed on a computer.

In addition, it should be noted that the described apparatus embodiment is merely an example. The units described as separate parts may or may not be physically separate, and parts displayed as units may or may not be physical units, that is, may be located in one position, or may be distributed on a plurality of network units. Some or all of the modules may be selected based on an actual requirement to achieve the objectives of the solutions of embodiments. In addition, in the accompanying drawings of the apparatus embodiments provided by this application, connection relationships between the modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or may be implemented by dedicated hardware, including a dedicated integrated circuit, a dedicated CPU, a dedicated memory, or a dedicated component. Generally, any function that can be performed by a computer program can be easily implemented by using corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a forwarding device (which may be a personal computer, a training device, or a network device) to perform the methods described in embodiments of this application.

All or some of the foregoing embodiments may be implemented by software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, the procedures or functions based on embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), or a semiconductor medium (for example, a solid-state disk (solid state disk, SSD)).

**Claims**

1. A multi-access edge computing network, comprising a forwarding device and a plurality of application instances, wherein a target application instance in the plurality of application instances is configured to process a target service whose required latency is lower than a target threshold;

the forwarding device is configured to receive a plurality of service requests from a user plane function network element, and preferably forward a target service request that is in the plurality of service requests and that belongs to the target service; and
the target application instance is configured to process the target service request of the target service.

2. The multi-access edge computing network according to claim 1, wherein the target service is a 5th generation mobile communication technology 5G service.

3. The multi-access edge computing network according to claim 1 or 2, wherein the forwarding device is configured to identify, from the plurality of service requests, the target service request that has an identifier of the 5th generation mobile communication technology 5G service and low latency quality of service QoS.

4. The multi-access edge computing network according to any one of claims 1 to 3, wherein

the forwarding device is configured to: determine, based on the identifier of the 5G service and the low latency quality of service QoS that are carried in the target service request, that a priority of the target service request is higher than that of another service request in the plurality of requests; determine, based on the identifier of the 5G service carried in the target service request, that a priority of the target service request is higher than that of another service request in the plurality of requests; or determine, based on the low latency quality of service QoS carried in the target service request, that a priority of the target service request is higher than that of another service request in the plurality of requests; and
the forwarding device is configured to preferentially forward the target service request based on the priority.

5. The multi-access edge computing network according to any one of claims 1 to 4, wherein the forwarding device is configured to obtain a bandwidth for preferentially forwarding the target service request.

6. The multi-access edge computing network according to any one of claims 1 to 5, wherein the bandwidth for forwarding the target service request is higher than a bandwidth for forwarding another service request.

7. The multi-access edge computing network according to any one of claims 1 to 6, wherein

the forwarding device is configured to preempt the bandwidth for forwarding the another service request, to forward the target service request.

8. The multi-access edge computing network according to any one of claims 1 to 7, wherein
the forwarding device is configured to reject to forward the target service request when a location of user equipment that sends the target service request is beyond a service range of the forwarding device.

9. The multi-access edge computing network according to any one of claims 1 to 8, wherein the forwarding device comprises:

a gateway, configured to receive the target service request, and forward the target service request to a container network; and
the container network, configured to receive the target service request, and forward the target service request to the target application instance, wherein
the gateway preferentially forwards the target service request, the container network preferentially forwards the target service request, or both the gateway and the container network preferentially forward the target service request.

10. The multi-access edge computing network according to any one of claims 1 to 9, wherein
the user plane function network element is configured to receive the target service request from a radio access network element.

11. The multi-access edge computing network according to any one of claims 1 to 10, wherein
the user plane function network element is configured to receive the target service request from the user equipment.

12. The multi-access edge computing network according to any one of claims 1 to 11, wherein the application instance is an application container.

13. The multi-access edge computing network according to any one of claims 1 to 12, wherein the multi-access edge computing network further comprises:
an information collection network element, configured to establish a protocol data unit session for the user equipment, so that the forwarding device receives the target service request of the user equipment.

14. A network, wherein the network comprises the multi-access edge computing network according to any one of claims 1 to 13.

15. The network according to claim 14, wherein the network comprises:
a user plane function network element, configured to send the target service request to the forwarding device.

16. The network according to claim 15, wherein the network comprises:
a radio access network element, configured to send the target service request to the user plane function network element.

17. The network according to claim 16, wherein the network comprises:
user equipment, configured to send the target service request to the radio access network element, so that the user plane function network element obtains the target service request through the radio access network element.

18. A multi-access edge computing network, comprising a forwarding device and a plurality of application instances, wherein a target application instance in the plurality of application instances is configured to process a target service whose required latency is lower than a target threshold;

the forwarding device is configured to receive a plurality of service requests from a user plane function network element, and forward, through a first channel, a target service request that is in the plurality of service requests and that belongs to the target service, wherein the first channel is different from a second channel for sending another service request to another application instance; and
the target application instance is configured to process the target service request of the target service.

19. A traffic processing method, wherein the method is applied to a multi-access edge computing network, the multi-access edge computing network comprises a forwarding device and a plurality of application instances, a target application instance in the plurality of application instances is configured to process a target service whose required latency is lower than a target threshold, and the method comprises:

receiving, by the forwarding device, a plurality of service requests from a user plane function network element;
preferentially forwarding, by the forwarding device, a target service request that is in the plurality of service requests and that belongs to the target service; and
processing, by the target application instance, the target service request of the target service.

20. The method according to claim 19, wherein the target service is a 5th generation mobile communication technology 5G service.

21. The method according to claim 19 or 20, wherein the method further comprises:
identifying, by the forwarding device from the plurality of service requests, the target service request that has an identifier of the 5th generation mobile communication technology 5G service and low latency quality of service QoS.

22. The method according to any one of claims 19 to 21, wherein the preferentially forwarding, by the forwarding device, a target service request that is in the plurality of service requests and that belongs to the target service comprises:

determining, by the forwarding device based on the identifier of the 5G service and the low latency quality of service QoS that are carried in the target service request, that a priority of the target service request is higher than that of another service request in the plurality of requests; determining, based on the identifier of the 5G service carried in the target service request, that a priority of the target service request is higher than that of another service request in the plurality of requests; or determining, based on the low latency quality of service QoS carried in the target service request, that a priority of the target service request is higher than that of another service request in the plurality of requests; and preferentially forwarding, by the forwarding device, the target service request based on the priority.

23. The method according to any one of claims 19 to 22, wherein the method further comprises:
obtaining, by the forwarding device, a bandwidth for preferentially forwarding the target service request.

24. The method according to any one of claims 19 to 23, wherein the bandwidth for forwarding the target service request is higher than a bandwidth for forwarding another service request.

25. The method according to any one of claims 19 to 24, wherein the method further comprises:
preempting, by the forwarding device, the bandwidth for forwarding the another service request, to forward the target service request.

26. The method according to any one of claims 20 to 25, wherein the method further comprises:
rejecting to forward the target service request when a location of user equipment that sends the target service request is beyond a service range of the forwarding device.

27. The method according to any one of claims 20 to 26, wherein the forwarding device comprises a gateway and a container network, and the preferentially forwarding, by the forwarding device, a target service request that is in the plurality of service requests and that belongs to the target service comprises:

receiving, by the gateway, the target service request, and forwarding the target service request to the container network; and
receiving, by the container network, the target service request, and forwarding the target service request to the target application instance, wherein
the gateway preferentially forwards the target service request, the container network preferentially forwards the target service request, or both the gateway and the container network preferentially forward the target service request.

28. The method according to any one of claims 20 to 27, wherein the application instance is an application container.

29. The method according to any one of claims 20 to 28, wherein the multi-access edge computing network further comprises an information collection network element, and the method further comprises:
establishing, by the information collection network element, a protocol data unit session for the user equipment, so that the forwarding device receives the target service request of the user equipment.

30. A traffic processing method, wherein the traffic processing method is applied to a multi-access edge computing network, the multi-access edge computing network comprises a forwarding device and a plurality of application instances, a target application instance in the plurality of application instances is configured to process a target service whose required latency is lower than a target threshold, and the method comprises:

receiving, by the forwarding device, a plurality of service requests from a user plane function network element;
forwarding, by the forwarding device through a first channel, a target service request that is in the plurality of service requests and that belongs to the target service, wherein the first channel is different from a second channel for sending another service request to another application instance; and
processing, by the target application instance, the target service request of the target service.

31. A computer-readable storage medium, wherein the computer-readable storage medium stores instructions, and when the instructions are run on a plurality of computing devices, the plurality of computing devices are enabled to perform the method according to any one of claims 19 to 29 or perform the method according to claim 30.

32. A forwarding device, wherein the forwarding device comprises a processor and a memory, wherein

the memory is configured to store computer instructions; and
the processor is configured to perform, based on the computer instructions, operation steps of the method according to any one of claims 19 to 29, or perform operation steps of the method according to claim 30.

33. A computer program product comprising instructions, wherein when the computer program product is run on a forwarding device, the forwarding device is enabled to perform operation steps of the method according to any one of claims 19 to 29, or perform operation steps of the method according to claim 30.

MEC network

Application
instance 103

| Application program | Application program | MEC platform management 106 |

Forwarding device 100

MEC platform 104

Virtualization infrastructure 105

User
equipment 210

Radio access
network network
element 220

User plane
function network
element 230

FIG. 1

FIG. 2

| User equipment 210 | Radio access network network element 220 | User plane function network element 230 | Information collection network element 240 | Gateway 101 | Container network 102 | Application container 103 |
|---|---|---|---|---|---|---|

S301: Target service request

S302: Target service request

S303: Target service request

S304: Information feedback request

S305: Latency indication information

S306: Determine a priority based on the latency indication information

S307: Forward the target service request based on the priority

S308: Information feedback request

S309: Latency indication information

S310: Determine the priority based on the latency indication information

S311: Forward the target service request based on the priority

FIG. 3

| User equipment 210 | Radio access network network element 220 | User plane function network element 230 | 5G management and control plane network element 240 | Information collection network element 107 |
|---|---|---|---|---|

S401: Subscribe to a session message

S402: Send a session establishment request

S403: Deliver a traffic rule

S404: Notification message

S405: Collect a network slice type and quality of service information

S406: Collect source IP/MAC addresses before and after conversion

S407: Collect a location of the user equipment 210

S408: Feed back a result indicating successful session establishment

S409: Return the successfully established session message

FIG. 4

FIG. 5

MEC network

Application container 103

Forwarding device 100

Application program

Application program

Gateway 101

Queuing module 1011

Filtering module 1012

Container network 102

Queuing module 1021

MEC platform 104

Virtualization infrastructure 105

MEC platform management 106

User equipment 210

Radio access network network element 220

User plane function network element 230

Adapter module 231

FIG. 6

Traffic processing apparatus 700

Communication module 701

Forwarding module 702

Bandwidth obtaining module 704

Identification module 703

Forwarding rejection module 705

FIG. 7

FIG. 8

## INTERNATIONAL SEARCH REPORT

| International application No. |
| --- |
| **PCT/CN2022/075254** |

**A. CLASSIFICATION OF SUBJECT MATTER**

H04W 28/10(2009.01)i; H04W 28/24(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, EPODOC, WPI, IEEE: 多址边缘计算, 多接入边缘计算, 移动边缘计算, 优先, 优先级, 时延, 延时, 延迟, 用户面功能, 应用实例, 转发, 网关, 业务, 服务, 请求, MEC, multi-access edge computing, mobile edge computing, prior+, latency, UPF, application instantiation, forward, router, gateway, service, request

**C. DOCUMENTS CONSIDERED TO BE RELEVANT**

| Category* | Citation of document, with indication, where appropriate, of the relevant passages | Relevant to claim No. |
| --- | --- | --- |
| Y | CN 110198307 A (SHENZHEN TENCENT COMPUTER SYSTEMS CO., LTD.) 03 September 2019 (2019-09-03) <br> claims 1-15, description paragraphs [0209]-[0214] | 1-33 |
| Y | CN 109450980 A (SOUTHEAST UNIVERSITY) 08 March 2019 (2019-03-08) <br> description, paragraphs [0002]-[0022] | 1-33 |
| A | US 2021014133 A1 (INTEL CORPORATION) 14 January 2021 (2021-01-14) <br> entire document | 1-33 |
| A | CN 111679904 A (BEIJING CENTURY INTERNET BROADBAND DATA CENTER CO., LTD.) 18 September 2020 (2020-09-18) <br> entire document | 1-33 |
| A | ETSI. ""Multi-access Edge Computing (MEC);Framework and Reference Architecture"" <br> *ETSI GS MEC 003 V2.1.1 (2019-01)*, 31 January 2019 (2019-01-31), <br> entire document | 1-33 |

☐ Further documents are listed in the continuation of Box C.  ☑ See patent family annex.

| | |
| --- | --- |
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **14 April 2022** | **26 April 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/075254**

| Patent document cited in search report | | | Publication date (day/month/year) | Patent family member(s) | | | Publication date (day/month/year) |
|---|---|---|---|---|---|---|---|
| CN | 110198307 | A | 03 September 2019 | US | 2021273987 | A1 | 02 September 2021 |
| | | | | KR | 20210094077 | A | 28 July 2021 |
| | | | | EP | 3968594 | A1 | 16 March 2022 |
| | | | | WO | 2020228469 | A1 | 19 November 2020 |
| CN | 109450980 | A | 08 March 2019 | None | | | |
| US | 2021014133 | A1 | 14 January 2021 | DE | 102021209145 | A1 | 31 March 2022 |
| CN | 111679904 | A | 18 September 2020 | None | | | |

Form PCT/ISA/210 (patent family annex) (January 2015)